# FASCICULE DE BREVET EUROPEEN

(11) **EP 3 187 051 B1**
(45) Date de publication et mention de la délivrance du brevet: **28.11.2018**
(21) Numéro de dépôt: 16205222.9
(22) Date de dépôt: 20.12.2016
(51) Int. Cl.: A22C 11/10, B65B 9/00

(54) **APPAREIL DE MISE EN PORTION DE SAUCISSES S'ENROULANT AUTOUR D'UNE PLATINE ET DOTE D'UN OUTIL DE COUPE**
GERÄT ZUM PORTIONIEREN VON WÜRSTEN, DAS SICH UM EINE PLATTE ROLLT UND MIT EINEM SCHNEIDEWERKZEUG AUSGESTATTET IST
APPARATUS FOR DIVIDING SAUSAGES INTO PORTIONS, WINDING AROUND A PLATE AND PROVIDED WITH A CUTTING TOOL

(30) Priorité: 29.12.2015 FR 1563449
(43) Date de publication de la demande: 05.07.2017
(73) Titulaire: System B, 53000 Laval (FR)
(72) Inventeur: BEUCHER, Jeremy, 53960 Bonchamp-les-Laval (FR)
(74) Mandataire: Vidon Brevets & Stratégie

(56) Documents cités:
- EP-A1- 0 109 801
- EP-A1- 0 139 333
- EP-A1- 0 503 720
- WO-A2-94/23584

## Description

### 1. Domaine de l'invention

L'invention concerne un appareil de mise en portion de saucisses à partir d'une saucisse continue qui le découpe en portion égale. Une particularité de l'invention réside dans le fait que la saucisse découpée n'a pas besoin d'être torsadée à ses extrémités ni d'être liée pour éviter que la chair ne s'échappe. A cette fin, l'appareil comporte des pinces exerçant un mouvement transversal sur le boyau afin de l'étirer.

### 2. Art antérieur

Dans le domaine de l'agroalimentaire, les professionnels disposent d'appareils de mise en portion permettant à partir d'un produit fabriqué en grande quantité de produire des portions individuelles. Plus précisément, la présente invention concerne un dispositif de mise en portions d'un produit alimentaire allongé qui est découpé en portions individuelles, et plus particulièrement un dispositif de mise en portions comprenant au moins une paire de pinces particulières, notamment pour la réalisation de saucisses à partir d'une saucisse continue constituée d'un produit alimentaire tel qu'un hachis de viande ou poisson et/ou légumes, recouvert d'une peau ou enveloppe.

De nos jours, les appareils de mise en portions pour la fabrication de produits de type saucisses comprennent généralement au moins une paire de pinces opposées aptes à être déplacées l'une vers l'autre par des moyens d'actionnement d'une position ouverte vers une position fermée afin de pincer le boyau rempli de produit alimentaire. Chaque pince comprend une plaque munie dans son extrémité qui fait face à l'autre pince, d'un bord avant de pincement, sensiblement en forme de V. Les deux pinces sont décalées l'une par rapport à l'autre de sorte que, lors de leur déplacement vers la position fermée, les pinces se chevauchent à la manière d'une cisaille, et forment par leur bord avant un passage ou diaphragme dont la section diminue progressivement. Lors du pincement, le boyau est resserré et le produit alimentaire est chassé de chaque coté du point de contraction.

Une fois que le boyau est resserré, il doit être coupé exactement à l'endroit du resserrement et le produit alimentaire doit être maintenu dans la portion ainsi constituée. Pour cela, l'appareil de mise en portions comprend des moyens de coupe comportant une lame associée à la paire de pinces, apte à être actionnée pour couper le boyau lorsque les pinces sont en position fermée, c'est à dire rapprochée au maximum.

Pour éviter que le produit alimentaire ne sorte du boyau par les deux extrémités ouvertes du boyau, une première solution consiste à entourer l'extrémité d'un lien souple qui est noué bien serré ou d'une agrafe métallique en forme de U qui est ensuite écrasée pour que les deux branches du U se chevauchent. Ces deux solutions sont efficaces mais complexe à mettre en oeuvre et augmentent à la fois le coût de fabrication de l'appareil, et le prix d'une portion individuelle.

Une autre solution consiste à augmenter l'épaisseur des pinces de façon à allonger la longueur de boyau dans laquelle le produit alimentaire est chassé. Les portions individuelles présentent alors aux extrémités des petites queues d'enveloppe vidée. Cette autre solution consiste également à effectuer une torsion sur le boyau entre les pinces au moment où la portion est encore maintenue par les pinces. Après découpage, les deux queues restent torsadées et maintiennent le produit alimentaire dans la portion individuelle. Cette solution est économique mais complexe à mettre en oeuvre dans un appareil.

De plus, le marché actuel de la saucisse concerne de plus en plus de fabricants qui n'ont pas les moyens d'acheter des produits industriels destinés à de grande production. Il est donc souhaitable de développer et commercialisé un appareil industriel qui soit peu couteux et simple dans son fonctionnement.

Un dispositif selon le préambule de la revendication 1 est divulgué dans le document EP 0 139 333 A1.

Il existe donc un réel besoin d'un appareil de mise en portion de saucisses à partir d'une saucisse continue, constituée d'un boyau rempli de produit alimentaire, qui assure à la fois une découpe de saucisse selon une longueur calibrée et qui assure une bonne fermeture des extrémités afin de maintenir à l'intérieur le produit alimentaire.

### 3. Objectifs de l'invention

L'invention présente donc un nouvel appareil et un nouveau procédé de fabrication permettant de mettre en portion sans un coût trop élevé des saucisses dont les extrémités maintiennent le produit alimentaire à l'intérieur. Cet appareil reçoit la saucisse continue et peut mettre en portion des saucisses pour de petites et moyennes cadences. Cet appareil s'adapte facilement à différents diamètres de saucisses continues disponibles sur le marché. Cet appareil dispose de plusieurs réglages permettant notamment de faire varier la longueur des saucisses.

### 4. Exposé de l'invention

En vue de résoudre au moins les problèmes mentionnés précédemment, la présente invention propose un dispositif de mise en portion de saucisses à partir d'une saucisse continue formée d'un boyau souple contenant un produit alimentaire, tel que de la chair à saucisse, le dispositif comprenant une platine rotative munie d'une succession d'organes de serrage disposés selon un cercle centré autour de l'axe de la platine, les organes de serrage comportant au moins une paire de pinces dont une pince au moins de chaque pince est mobile, les pinces étant animées par la rotation de la platine dans un mouvement de va-et-vient entre une position d'ouverture et une position de fermeture, la saucisse continue étant serrée entre les pinces dans la position de fermeture et tirée par lesdites pinces pour s'enrouler autour de la platine lors de sa rotation. Chaque pince possède un bord avant de pincement entrant en contact avec la saucisse continue, et en ce qu'en position de fermeture, les bords avant des deux pinces se chevauchent complétement sur une bande d'un largeur non nulle de façon à exercer sur le boyau un déplacement transversal à l'axe longitudinal de la saucisse continue.

De cette manière, le boyau est pincé et étiré sur une certaine longueur et subit un resserrement qui persiste lorsqu'il est coupé et qui permet de maintenir le produit alimentaire à l'intérieur du boyau.

Selon un premier mode de réalisation, l'au moins une pince mobile possède une embase se déplaçant en translation à l'aide d'une broche formant palpeur du type à came, coopérant avec au moins une came. De cette manière, le déplacement des pinces de chaque organe de serrage est facilité.

Selon un autre mode de réalisation, la broche s'insère dans une rainure pratiquée dans la paroi latérale de l'au moins une came cylindrique bloquée en rotation sur l'axe de la platine et dont l'axe longitudinal se confond avec cet axe de la platine. De cette manière, le déplacement des pinces s'effectue lorsque la platine est en rotation, les cames étant immobiles.

Selon un autre mode de réalisation, le dispositif de mise en portion comporte un organe de cisaillement associé à au moins une paire de pinces et se déplaçant en translation par la rotation de la platine. L'organe de cisaillement se déplace entre les pinces pour couper la saucisse continue lorsque les deux pinces sont en position de fermeture. De cette manière, la coupure s'effectue dans la zone de pincement, juste après que les chairs aient été chassées de cette zone. Lorsque les pinces s'écartent après la coupure, le boyau étiré maintient parfaitement le produit alimentaire à l'intérieur.

Selon un autre premier mode de réalisation, les bords avant de chaque pince sont en forme de guillements « < » et « > », les parties ouvertes des guillements « < » et « > » se faisant face, les deux pinces étant décalées l'une par rapport à l'autre de sorte que, lors de leur déplacement vers la position de fermeture, les pinces se chevauchent, et forment par leur bord avant un passage dont la section diminue progressivement pour devenir nulle. De cette manière, le boyau contenant le produit alimentaire est plus facilement resserré, puis est étiré.

Selon un autre mode de réalisation, les deux branches des guillements «<» et «>» se coupent à angle droit, les bords avant possédant un trou oblong pratiqué au niveau du point d'intersection des deux branches, les trous oblongs étant décalés en position de fermeture pour que la section du passage soit nulle. De cette manière, le boyau vidé de son produit alimentaire se positionne parfaitement dans les deux trous avant d'être coupé.

Selon un autre mode de réalisation, les deux pinces (8, 16, 17) de l'organe de serrage sont montées mobiles sur la platine et se déplacent l'une vers l'autre en translation. De cette manière, le déplacement de chaque pince est plus court et l'opération de serrer le boyau en chassant le produit à l'intérieur s'effectue plus rapidement.

Selon un autre mode de réalisation, la rotation de la platine entraînant le déplacement d'au moins une pince s'effectue par une manivelle maniée par un opérateur. De cette manière, le coût du dispositif est minimisé et sa maintenance est optimisée.

Selon un autre mode de réalisation, les pinces sont formées d'une pluralité d'au moins trois plaques présentant des bords avant droits et décalés les uns des autres et destinées à s'imbriquer les unes dans les autres, de façon à faire subir au boyau continue au moins deux déplacements perpendiculaires et de sens opposé. De cette manière, l'étirement du boyau est plus long et sa fermeture est plus efficace.

Selon un autre mode de réalisation, la platine comporte une pluralité de séries d'orifices de fixation des organes de serrage, chaque série possédant le même nombre d'orifices, les orifices de chaque série étant alignés selon un rayon de la platine, tous les orifices d'une même série étant placés sur un cercle dont le centre se situe sur l'axe de rotation de la platine, deux orifices voisins d'un même orifice d'une même série étant à égale distance de façon à mettre en portion des saucisses de même longueur au cours d'une rotation complète de la platine. De cette manière, il est possible de mettre en portion des saucisses de longueurs variables avec le même appareil.

### 5. Liste des figures

D'autres caractéristiques et avantages de l'invention apparaîtront plus clairement à la lecture de la description suivante d'un mode de réalisation particulier, donné à titre de simple exemple illustratif et non-limitatif, et des dessins annexés, parmi lesquels :
- la figure 1 vue de face un exemple de réalisation d'un appareil de mise en portion de saucisses à partir d'une saucisse continue,
- la figure 2 présente en perspective un exemple de réalisation d'un appareil de mise en portion de saucisses à partir d'une saucisse continue,
- la figure 3 montre en perspective le bâti 4 de l'appareil sans pièce mobile,
- la figure 4 présente en perspective le montage de la platine sur le bâti selon un mode préféré de réalisation,
- la figure 5 présente de profil et en perspective un organe de serrage fixé sur la platine selon un mode préféré de réalisation.
- la figure 6 représente un schéma montrant par transparence les positions des lames et des pinces, et leurs déplacements,
- la figure 7 montre le dispositif de mise en portion doté d'un seul organe de serrage et de deux glissières,
- la figure 8 montre en transparence la pince, la contre-pince et la lame en position d'ouverture,
- la figure 9 présente la pince, la contre-pince et la lame en position de fermeture,
- la figure 10 présente en détail la position de pinces et contre-pince et en médaillon le boyau resserré subissant un étirement,
- la figure 11 présente en médaillon et vue du dessus une pince et une contre-pince serrant et étirant un boyau entre elles,
- la figure 12 montre la découpe de la saucisse continue lorsque la pince et la contre-pince sont en position de fermeture, et montre la sortie de la lame,
- la figure 13 présente la position des lames, pince et contre-pince après la découpe de la saucisse,
- la figure 14 montre des exemples de valeurs d'angles de rotation de la platine associés aux différentes opérations de fabrication de saucisses,
- les figures 15.a, 15.b, 15.c, 15.d, et 15.e présentent des dispositions du dispositif pour mettre en portion des saucisses de longueurs variables.

### 6. Description d'un mode de réalisation de l'invention

### 6.1 Principe général

L'invention concerne un dispositif de mise en portion de saucisses à partir d'une saucisse continue formée d'un boyau souple contenant un produit alimentaire, tel que de la chair à saucisse. Le dispositif comprend notamment une platine rotative munie d'une succession d'organes de serrage disposés selon un cercle centré autour de l'axe de la platine, les organes de serrage comportant une paire de pinces dont une pince au moins est mobile, les pinces étant animées par la rotation de la platine dans un mouvement de va et vient entre une position d'ouverture et une position de fermeture, la saucisse continue étant serrée entre les pinces dans la position de fermeture et tirée par lesdites pinces pour s'enrouler autour de la platine lors de sa rotation. Chaque pince possède un bord avant de pincement entrant en contact avec la saucisse continue, et en ce qu'en position de fermeture, les bords avant des deux pinces se chevauchent complétement sur une bande d'un largeur non nulle de façon à exercer sur le boyau un déplacement transversal à l'axe longitudinal de la saucisse continue.

De cette manière, le boyau est pincé et étiré sur une certaine longueur et subit un resserrement qui persiste lorsqu'il est coupé et qui permet de maintenir le produit alimentaire à l'intérieur du boyau.

### 6.2 Description d'un mode de réalisation

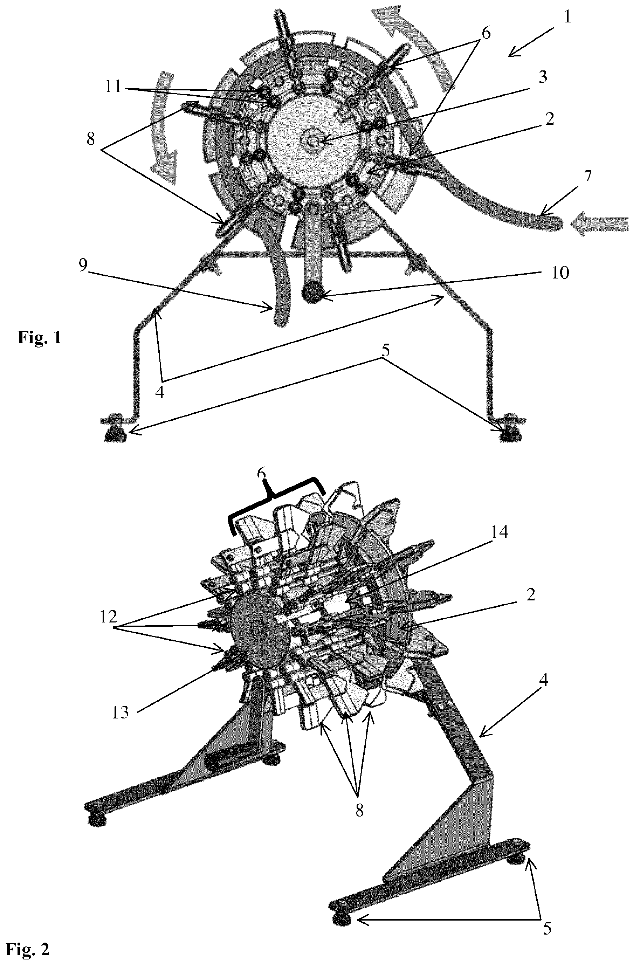

La **FIG.1** présente vue de face un exemple de réalisation d'un appareil de mise en portion de saucisses à partir d'une saucisse continue. L'appareil 1 possède une platine circulaire 2 dont l'axe rotatif 3 est monté horizontalement sur un bâti 4 doté de pieds 5. Des organes de serrage 6 sont disposés sur la face latérale de la platine, à une position d'un cercle centré autour de l'axe de la platine. L'appareil reçoit une saucisse continue 7 formée d'un boyau cylindrique dans lequel on a introduit un produit alimentaire, de la chair à saucisse par exemple. Les organes de serrage 6 disposent de pinces 8 destinées à entourer une saucisse continue 7 et la serrent afin de l'entraîner dans la rotation de la platine. La saucisse continue rejoint la platine tangentiellement au cercle supportant les organes de serrage. La saucisse continue est suffisamment souple pour prendre la forme circulaire imposée par les organes de serrage. La saucisse est serrée par les organes 6 et entraînée par la rotation de la platine 2. Au cours de cette rotation le boyau subit un resserrement progressif jusqu'à ce que le produit alimentaire soit chassé de chaque coté du point de contraction. Une fois le produit alimentaire chassé, les organes 6 continuent leurs translations sur quelques millimètres afin d'étirer le boyau. A cet endroit, le boyau est coupé par une lame placée au niveau de l'organe de serrage et la saucisse 9 ainsi coupée tombe dans un bac de collecte. La saucisse s'enroule autour d'une forme circulaire avant d'être coupée et conserve par la suite, cet aspect courbe qui présente un bel aspect sur le plan de la commercialisation.

Les pinces 8 sont animées en translation par deux cames solidarisées au moyen de la platine par clavetage de façon qu'elles occupent une position parfaitement fixe par rapport au bâti 4.

La rotation de la platine 2 est provoquée manuellement par un opérateur à l'aide d'une manivelle 10, évitant ainsi l'utilisation d'un moteur, et simplifiant la fabrication de l'appareil. Selon une variante de réalisation, la rotation de la platine s'effectue à l'aide d'un moteur électrique, le mode d'entrainement se fait prioritairement par des engrenages. Selon un perfectionnement non représenté dans la Fig. 1, la platine possède plusieurs séries d'orifices 11 de fixation des organes de serrage 6, chaque série possède le même nombre de d'orifices, et les orifices de chaque série sont alignés selon un rayon de la platine. Tous les orifices d'une même série sont placés sur un cercle dont le centre se situe sur l'axe de rotation de la platine. Les deux orifices voisins d'un même orifice d'une même série étant à égale distance, les organes de serrage 6 le sont aussi et cette disposition permet de produire des saucisses de même longueur.

La **FIG.2** présente en perspective un exemple de réalisation d'un appareil de mise en portion de saucisses à partir d'une saucisse continue. Les organes de serrage 6 sont solidarisés sur la platine par des glissières 12 droites et cylindriques passant à travers les orifices 11, ces glissières débouchent de chaque coté de la platine et sont maintenues parallèles entre elles. Les pinces coulissent sur les glissières par le guidage de deux cames cylindriques dont les axes se confondent avec celui de la platine 2. Une came avant 13 est placée à l'avant de la platine, et une came arrière 14 à l'arrière. Comme nous le verrons par la suite, la came avant 13 provoque le déplacement des pinces et des lames, et la came arrière 14 provoque le déplacement de la contre-pince.

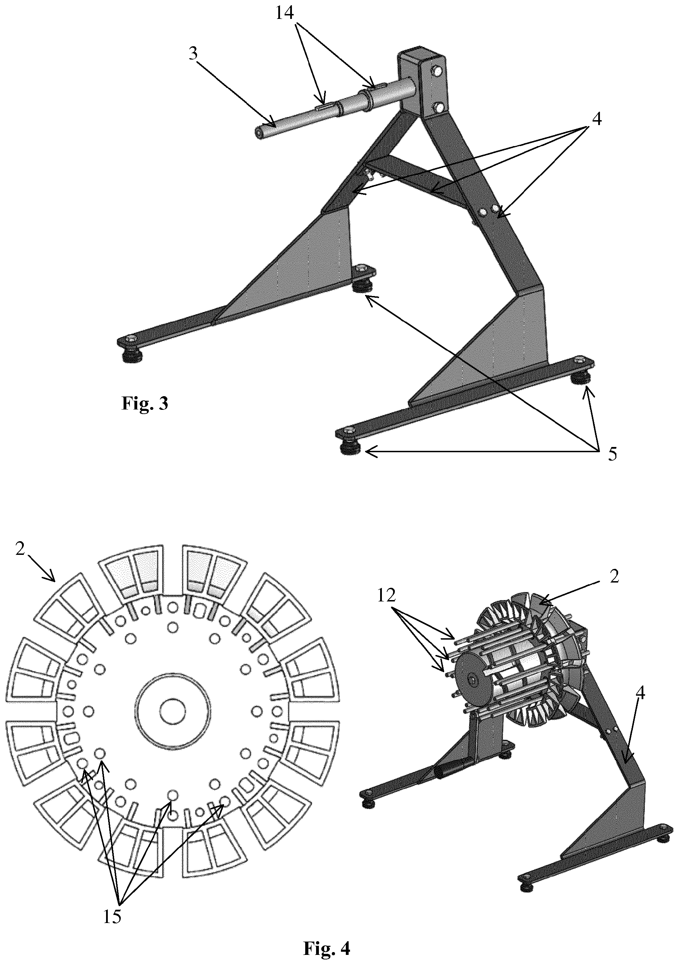

La **FIG.3** montre en perspective le bâti 4 de l'appareil sans pièce mobile. Le bâti se pose sur quatre pieds 5 réglables en hauteur et supporte un axe 3 horizontal fixé en partie supérieure, cet axe 3 possède trois sections. La première section qui se situe à l'extrémité de l'arbre opposé à sa fixation sur le bâti 4 possède un petit diamètre et une clavette. La came avant 13 vient se fixer sur cette première section et sa rotation est bloquée par la première clavette. La seconde section d'un diamètre supérieur sert de palier pour la libre rotation de la platine 2. Une troisième section avec le diamètre le plus important supporte la came arrière 14, qui est elle-aussi bloquée en rotation par une seconde clavette.

La **FIG.4** présente en perspective le montage de la platine sur le bâti selon un mode préféré de réalisation. La platine 2 vient se glisser sur la seconde section de l'axe 3 et est libre en rotation. Selon le mode de réalisation représenté par la partie gauche de la **Fig. 4****,** la platine circulaire comporte deux séries d'orifices 15 alignés selon des rayons uniformément répartis autour de l'axe de rotation de la platine, chaque série formant une circonférence centrée autour de l'axe de rotation. Les glissières 12 viennent s'insérer dans ces orifices de façon à dépasser de chaque coté. Les glissières 12 sont emmanchées serrées dans les orifices de la platine. Selon un perfectionnement, l'appareil de mise en portion dispose d'une roue de guidage dont la gorge de section circulaire reçoit le boyau continu et le dirige dans son déplacement autour de l'appareil.

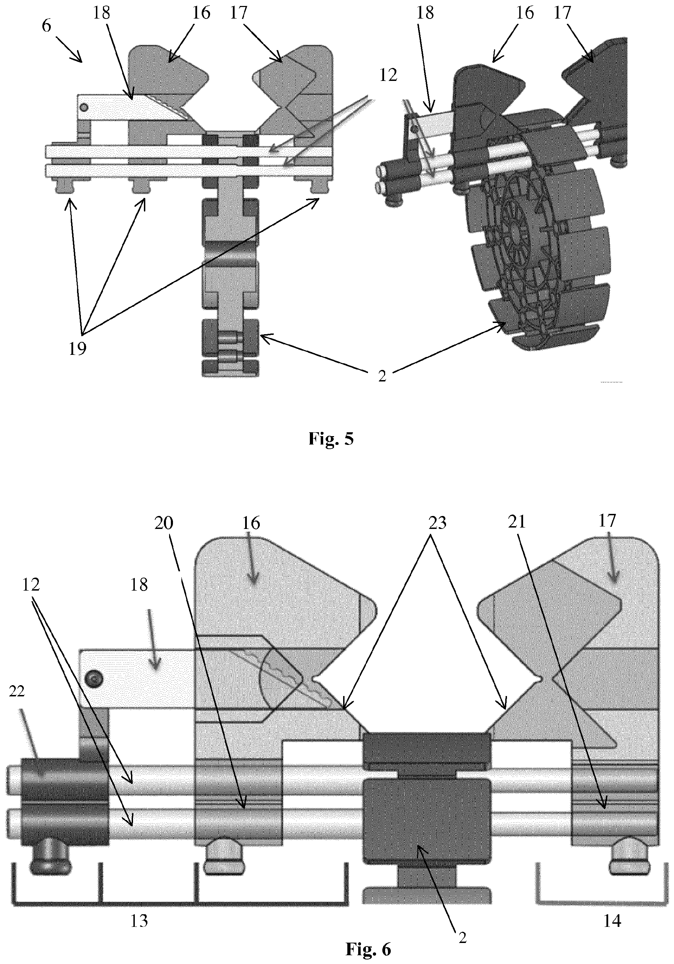

La **FIG.5** présente de profil et en perspective un organe de serrage fixé sur la platine selon un mode préféré de réalisation. L'organe de serrage se compose d'une paire de pinces 8, des éléments pour en mouvoir au moins une et d'un moyen de cisaillement. Plus précisément, une pince 16 et une contre-pince 17 sont animées en translation par la rotation de la platine 2 dans un mouvement de va et vient entre une position d'ouverture et une position de fermeture. La saucisse continue est ainsi serrée entre les pinces dans la position de fermeture et tirée par les pinces pour s'enrouler autour de la platine lors de sa rotation. Lorsque la saucisse continue est complètement serrée par les pinces, le moyen de cisaillement 18, typiquement une lame 18, se déplace latéralement et vient s'insérer entre les pinces pour couper le boyau. Selon un mode simple de réalisation, une seule pince est animée en translation. Selon un exemple préféré de réalisation, le déplacement des pièces mobiles est moins important car il est réparti sur la pince et la contre-pince. Selon un mode préféré de réalisation, les trois éléments : pinces 16, contre-pince 17 et lame 18 sont animés en translation par un système de deux cames. Ces trois éléments se prolongent dans leur partie orientée vers l'axe 3 de la platine par des broches cylindriques 19, de forme circulaire. Chaque broche 19 forme un palpeur du type à came et vient s'insérer dans une rainure correspondante pratiquée dans une des deux cames 13 ou 14.

La **Fig. 6** représente un schéma montrant par transparence les positions des lames et des pinces, et comment s'effectuent leurs déplacements. La pince 16 possède une embase 20 qui comporte deux trous allongés et cylindrique, dont les axes sont parallèles à l'axe 3 de rotation de la platine 2. Les deux glissières 12 s'insèrent dans les trous allongés et la pince coulisse sur ces glissières sans pouvoir pivoter. De même, la contre-pince 17 possède également une embase 21 dotée de deux trous allongés pour recevoir les mêmes glissières. Enfin, la lame 18 est aussi montée sur une embase 22 du même type que les deux précédentes. De cette manière, la pince 16, la contre-pince 17 et la lame 18 peuvent coulisser sur les mêmes glissières et se positionnent avec précision les unes par rapport aux autres. Les deux embases 20, 22 se prolongent dans leur partie orientée vers l'axe de rotation de la platine par deux broches cylindriques 19 qui s'insèrent dans deux rainures pratiquées dans la came avant 13. L'embase 21 se prolonge également par une broche cylindrique 19 qui s'insère dans une rainure pratiquée dans la came arrière 14. Les rainures de chaque came possèdent une largeur au moins égale au diamètre de la broche 19.

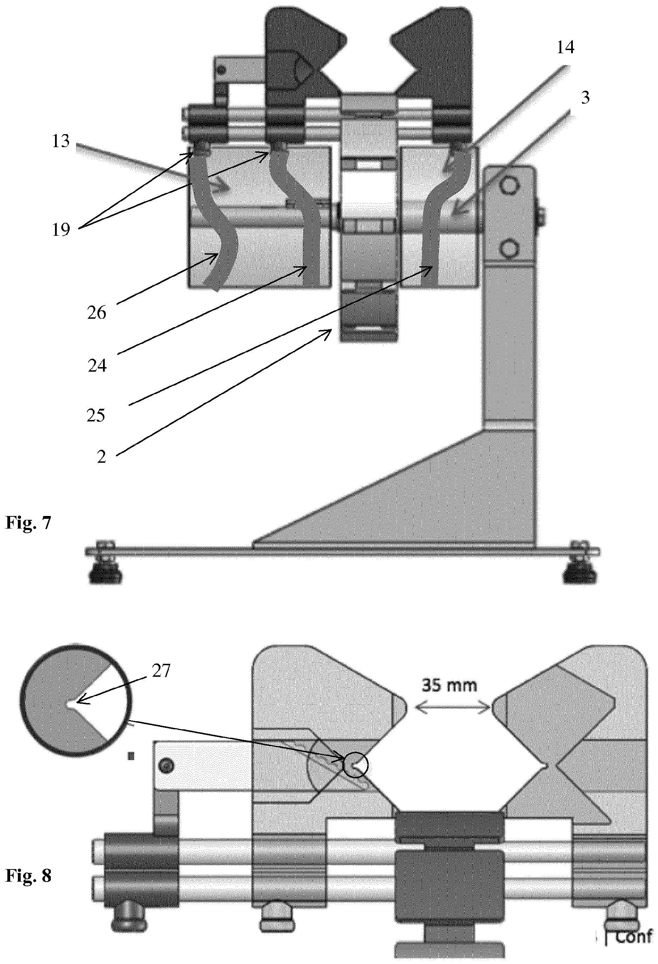

La **Fig. 7** montre le dispositif de mise en portion doté d'un seul organe de serrage et de deux glissières. Les deux cames 13 et 14 sont montées de façon fixe sur l'axe 3 qui est vu par transparence. La rotation de la platine entraîne également la rotation des organes de serrage 6. Les trois broches cylindriques 19 suivent alors le tracé imposé par les trois rainures 24, 25 et 26 pratiquées sur les flancs des cames cylindrique 13 et 14. Le déplacement des broches entraînent celui des pinces, contre-pince et lame qui alternativement se rapprochent et s'éloignent de la platine 2. Le tracé des rainures 24, 25 et 26 définit précisément les distances relatives entre les trois éléments de l'organe de serrage : la pince 16, la contre-pince 17 et la lame 18. Nous allons maintenant détailler la cinématique du déplacement de ces éléments en fonction de la rotation de la platine, et monter comment il est possible de couper une saucisse continue de façon que les extrémités des saucisses maintiennent le produit alimentaire à l'intérieur, sans nécessité de les torsader.

La **Fig. 8****,** montre en transparence la position de la pince 16, la contre-pince 17 et la lame 18 en position d'ouverture. Les extrémités avant de chaque pince présentent une encoche qui définit un bord de pincement en forme de guillemets « < » et « > ». Les deux pinces se font face et présentent à l'autre la partie ouverte des guillemets « < » et « > en formant un passage « < > » appelé par la suite « diaphragme ». Les pinces et contre-pince sont décalées l'une par rapport à l'autre de façon que, lors de leurs translations, ces éléments se chevauchent à la manière d'une cisaille, et forment par leur bord avant le diaphragme. La lame 18 est montée horizontalement et traverse à la fois la pince 16 et la contre-pince 17. Dans la position d'ouverture, les extrémités des branches des guillemets « < » et « > » sont écartées d'au moins une distance déterminée, pour permettre le passage de la saucisse continue dans le diaphragme, cette distance est de 35 millimètres sur le prototype réalisé. Les deux rainures 24 et 25 contrôlent le mouvement des pinces 16 et contre-pinces 17 d'une part, et la rainure 26 contrôle le mouvement des lames 18 d'autre part. Dans la position illustrée par la Fig. 8, les trois éléments sont écartés au maximum, les deux rainures 26 et 24 contrôlent respectivement le mouvement de la lame 18 et des pinces 16 et sont écartées d'une distance DL correspondant à la longueur utile de la lame 18. Lorsque, au cours de la rotation de la platine 2, la saucisse continue 7 vient se loger dans le diaphragme, les rainures 24 et 25 se rapprochent l'une vers l'autre. Dans le même temps, la rainure 26 contrôlant le mouvement des lames se rapproche également de celle de la contre-pince tout en maintenant constante la distance DL avec celle de la pince. Au cours de ce déplacement, les pinces se resserrent progressivement autour de la saucisse continue et chassent le produit alimentaire de la zone de pincement.

Selon un perfectionnement, les deux branches des guillemets « < » et « > » se coupent à angle droit et un trou oblong 27 est pratiqué dans le bord avant au niveau du point d'intersection. Ce trou oblong permet de rassembler tout le boyau en un faible volume à l'intersection des deux branches des guillemets «<» et «>», lorsque les pinces et contre-pinces viennent de se chevaucher.

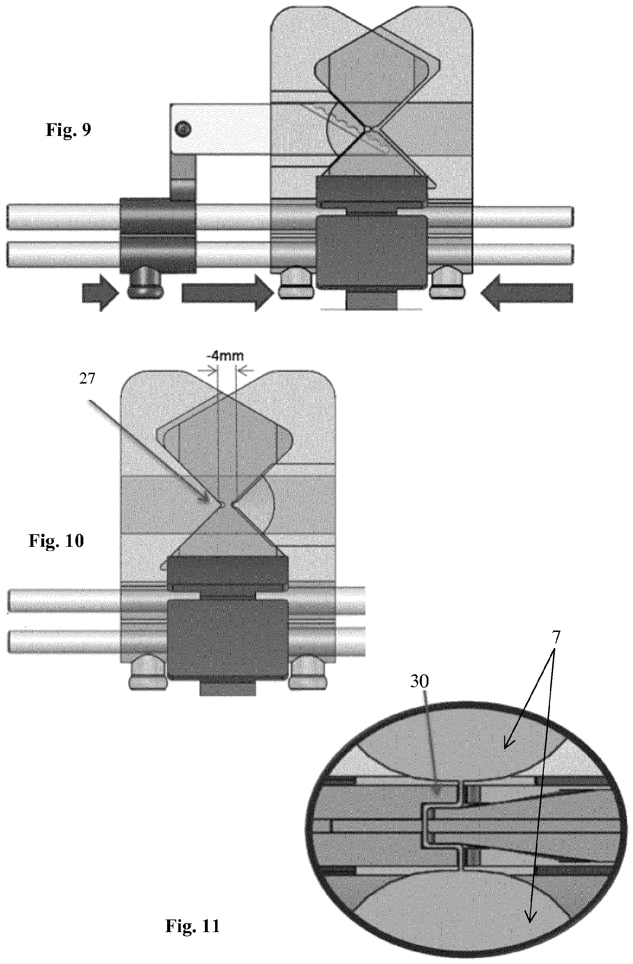

Après un certain angle de rotation de la platine les organes de serrage présentent la disposition illustrée par la Fig. 9. Dans cette position de fermeture, la pince, la contre-pince et la lame se sont déplacées dans les directions indiquées par les flèches. Les bords avant des pinces et contre-pince se chevauchent complétement sur une bande s'étendant du haut en bas et d'une largeur non nulle de façon que le boyau se déplace transversalement à l'axe longitudinal la saucisse continue.

La **Fig. 10** présente en détail la position des pinces et contre-pince en position de fermeture, le chevauchement des bords avant s'effectuant sur une bande d'au moins 4 millimètres. On peut ainsi voir que les deux trous oblongs 27 des bords avant des pinces et contre-pinces ne sont plus alignés et que la section du diaphragme est nulle.

Le médaillon de la **Fig. 11** montre la disposition d'une pince et d'une contre-pince vue du dessus avec un boyau serré entre eux. De chaque coté, la saucisse continue 7 est visible avec le produit alimentaire à l'intérieur. Le boyau resserré 30 subit un déplacement transversal à l'axe de la saucisse et de ce fait un étirement dans le sens de la longueur. Cet étirement dans le sens de la longueur provoque un rétrécissement du boyau dans le sens transversal qui va permettre de maintenir le produit alimentaire dans la saucisse lorsque celle-ci sera coupée par la lame 18. Selon un perfectionnement visible sur cette figure, les pinces et contre-pinces sont formées d'une pluralité d'au moins trois plaques présentant des bords avant droits et décalés les uns des autres. Sur un même plan, un bord avant d'une plaque de la pince entre en contact avec un bord avant d'une autre plaque de la contre-pince. Les plaques sont fixées flancs contre flancs de façon que la pince et la contre-pince s'imbrique l'une dans l'autre. De cette façon le boyau subit un premier déplacement perpendiculaire à l'axe de la saucisse entre la première et la seconde plaque dans un premier sens, puis un second déplacement dans un sens opposé au premier entre la seconde et la troisième plaque. Ces deux déplacements dans des sens opposés augmentent l'étirement de la saucisse continue, et le maintien du produit alimentaire dans le boyau est ainsi amélioré.

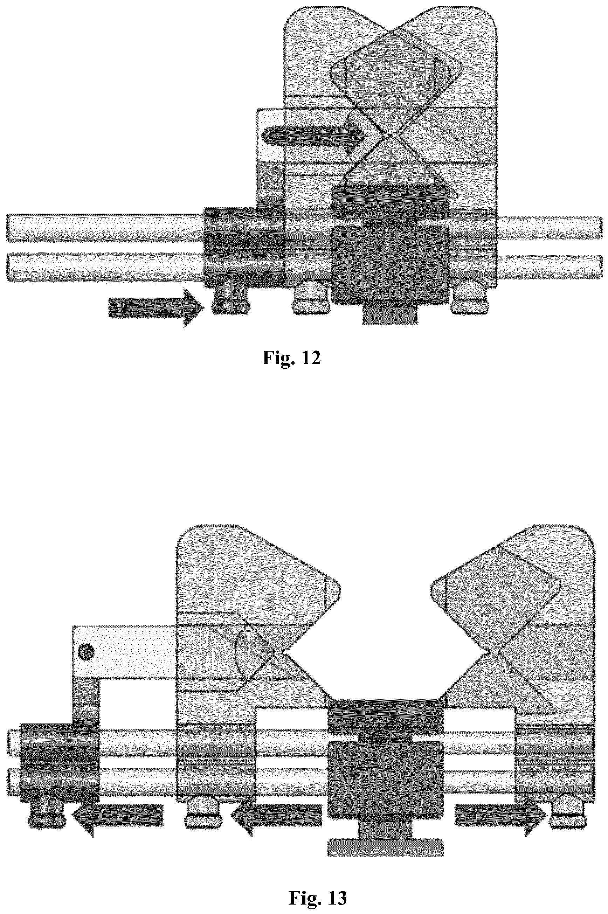

La Fig. 12 montre la découpe de la saucisse continue lorsque la pince et la contre-pince sont en position de fermeture. La découpe s'effectue en avançant la lame 18 à l'intérieur de la pince 16 jusqu'à une position où ladite lame traverse au-moins une partie de la contre-pince. Ce mouvement s'effectue en rapprochant la rainure 26 de la rainure 24. Le mouvement de la lame intervient au cours d'un certain nombre de degrés de rotation de la platine 2.

Lorsque la saucisse continue est coupée, les lames, pince et contre-pince peuvent s'écarter les uns des autres comme le montre la **Fig. 13****.** La saucisse ainsi découpée tombe dans le bac de collecte, et peut être conditionnée.

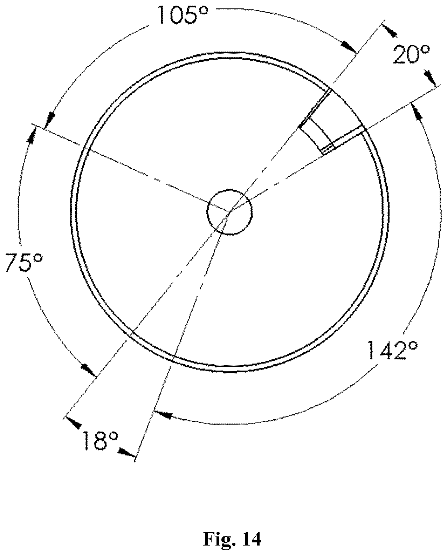

La **Fig. 14** montre un exemple de valeurs d'angles de rotation de la platine associées aux opérations suivantes :
- fermeture pince 16 et contre-pince 17,
- déplacement de la lame 18,
- ouverture de la pince 16 et de la contre-pince 17 et retour de la lame 18 à une position de repos.

Dans l'exemple illustré par les figures précédentes décrivant le prototype réalisé, l'étape de fermeture de la pince et de la contre-pince aboutissant à la position représentée à la **Fig. 9****,** s'effectue au cours d'une première rotation de 105°. Puis, l'étape de découpe de la saucisse continue consistant à déplacer la lame jusqu'à la position indiquée à la **Fig. 12****,** s'effectue au cours d'une seconde rotation de 75°. Enfin, l'étape de retrait de ces trois éléments de façon à accueillir de nouveau la saucisse continue comme cela est représenté à la **Fig. 6****,** s'effectue au cours d'une troisième rotation de 142°. Au cours de cette rotation, la lame 16, la contre-pince 17 et la lame 18 se déplacent concomitamment pour mutuellement s'éloigner. Une rotation intermédiaire de 18° entre la seconde et la troisième rotation ne provoque pas de déplacements de ces trois éléments, mais les stabilisent pour leur permettre ensuite de se déplacer dans l'autre sens.

Une rotation intermédiaire de 20° entre la troisième et la première rotation permet de retirer les organes de serrage.

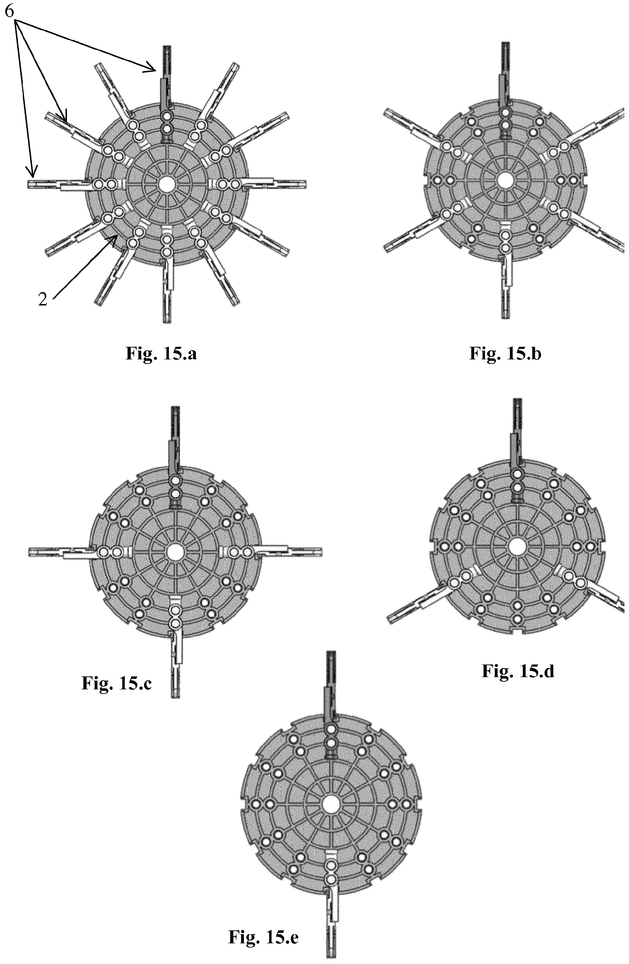

Selon un perfectionnement illustré par les **Fig. 15****.a, 15.b, 15.c, 15.d,** et **15. e.** le dispositif de mise en portion est capable de faire varier la longueur des saucisses découpées. Pour cela, il suffit d'augmenter ou de diminuer le nombre d'organes de serrage 6 disposés sur la platine 2. Les pinces peuvent facilement être ôtées en les retirant de leurs glissières 12. Le prototype réalisé comporte une platine d'un diamètre de 200 millimètres, et les premières et secondes séries de glissières 12 formant chacune une circonférence se positionnent respectivement à 67 millimètres et 83 millimètres de l'axe 3 de la platine. Si comme le montre la **Fig. 15****.a,** le maximum d'organes de serrage est fixé sur le dispositif de mise en portion, en l'occurrence 12, un tour complet de la platine produit 12 saucisses, d'une longueur chacune de 60 millimètres.

Si comme le montre la **Fig. 15****.b,** 6 organes de serrage sont fixés, alors un tour complet de la platine produit 6 saucisses, d'une longueur chacune de 120 millimètres. La **Fig. 15****.c** montre un dispositif avec 4 organes de serrage fixés, un tour complet de la platine produit alors 4 saucisses, d'une longueur chacune de 180 millimètres. La **Fig. 15****.d** montre une disposition avec 3 organes de serrage fixés sur la platine, pour une production de 3 saucisses par tour, d'une longueur chacune de 240 millimètres. La **Fig. 15****.e** présente un dispositif ayant 2 organes de serrage fixés sur la platine, et produisant 2 saucisses par tour, d'une longueur chacune de 360 millimètres. D'autres nombres d'organes de serrage sont possibles (18, 24,...). Plus le nombre d'organes est grand, plus le diamètre de la platine devient important de façon à pouvoir tous les loger.

L'invention n'est pas limitée aux modes de réalisation qui viennent d'être décrits. En particulier, l'appareil décrit précédemment peut produire tout produit alimentaire de forme allongée nécessitant un resserrement et un découpage selon une longueur déterminée.

## Revendications

1. Dispositif de mise en portion de saucisses à partir d'une saucisse continue (7) formée d'un boyau souple contenant un produit alimentaire, tel que de la chair à saucisse, ledit dispositif comprenant une platine (2) rotative munie d'une succession d'organes de serrage disposés selon un cercle centré autour de l'axe de la platine, les organes de serrage (6) comportant au moins une paire de pinces (8, 16, 17) dont une pince au moins de chaque pince est mobile, les pinces étant animées par la rotation de la platine dans un mouvement de va-et-vient entre une position d'ouverture et une position de fermeture, la saucisse continue étant serrée entre les pinces (8, 16, 17) dans la position de fermeture et tirée par lesdites pinces pour s'enrouler autour de la platine lors de sa rotation,
**caractérisé en ce que** chaque pince (8, 16, 17) possède un bord avant de pincement entrant en contact avec la saucisse continue, et **en ce qu'**en position de fermeture, les bords avant des deux pinces se chevauchent complétement sur une bande d'une largeur non nulle de façon à exercer sur le boyau un déplacement transversal à l'axe longitudinal de la saucisse continue.

2. Dispositif de mise en portion de saucisses selon la revendication 1,
**caractérisé en ce que** l'au moins une pince mobile (8, 16, 17) possède une embase se déplaçant en translation à l'aide d'une broche (19) formant palpeur du type à came, coopérant avec au moins une came (13,14).

3. Dispositif de mise en portion de saucisses selon la revendication 2,
**caractérisé en ce que** ladite broche (19) s'insère dans une rainure pratiquée dans la paroi latérale de l'au moins une came (13,14) cylindrique bloquée en rotation sur l'axe (3) de la platine et dont l'axe longitudinal se confond avec cet axe (3) de la platine.

4. Dispositif de mise en portion de saucisses selon l'une quelconque des revendications précédentes, **caractérisé en ce qu'**il comporte un organe de cisaillement (18) associé à au moins une paire de pinces (8, 16, 17) et se déplaçant en translation par la rotation de la platine, l'organe de cisaillement se déplaçant entre les pinces pour couper la saucisse continue lorsque les deux pinces sont en position de fermeture.

5. Dispositif de mise en portion de saucisses selon l'une quelconque des revendications précédentes, **caractérisé en ce que** les bords avant de chaque pince (8, 16, 17) sont en forme de guillemets « < » et « > », les parties ouvertes des guillemets « < » et « > » se faisant face, les deux pinces étant décalées l'une par rapport à l'autre de sorte que, lors de leur déplacement vers la position de fermeture, les pinces se chevauchent, et forment par leur bord avant un passage dont la section diminue progressivement pour devenir nulle.

6. Dispositif de mise en portion de saucisses selon la revendication 5,
**caractérisé en ce que** les deux branches des guillemets « < » et « > » se coupent à angle droit, les bords avant possédant un trou oblong (27) pratiqué au niveau du point d'intersection des deux branches, les trous oblongs étant décalés en position de fermeture pour que la section du passage soit nulle.

7. Dispositif de mise en portion de saucisses selon l'une quelconque des revendications précédentes, **caractérisé en ce que** les deux pinces (8, 16, 17) de l'organe de serrage (6) sont montées mobiles sur la platine et se déplacent l'une vers l'autre en translation.

8. Dispositif de mise en portion de saucisses selon l'une quelconque des revendications précédentes, **caractérisé en ce que** la rotation de la platine entraînant le déplacement d'au moins une pince s'effectue par une manivelle maniée par un opérateur.

9. Dispositif de mise en portion de saucisses selon l'une quelconque des revendications précédentes, **caractérisé en ce que** les pinces (8, 16, 17) sont formées d'une pluralité d'au moins trois plaques présentant des bords avant droits et décalés les uns des autres et destinées à s'imbriquer les unes dans les autres, de façon à faire subir au boyau au moins deux déplacements perpendiculaires et de sens opposé.

10. Dispositif de mise en portion de saucisses selon l'une quelconque des revendications précédentes, **caractérisé en ce que** la platine comporte une pluralité de séries d'orifices (11) de fixation des organes de serrage (6), chaque série possédant le même nombre d'orifices, les orifices de chaque série étant alignés selon un rayon de la platine (2), tous les orifices d'une même série étant placés sur un cercle dont le centre se situe sur l'axe de rotation de la platine, deux orifices voisins d'un même orifice d'une même série étant à égale distance de façon à mettre en portion des saucisses de même longueur au cours d'une rotation complète de la platine.

## Patentansprüche

1. Vorrichtung zum Portionieren von Würsten aus einer durchgehenden Wurst (7), die von einem weichen Darm, der ein Nahrungsmittel, wie Wurstbrät, gebildet ist, wobei die Vorrichtung eine drehende Platte (2) umfasst, die mit einer Aufeinanderfolge von Einspannelementen versehen ist, die entlang eines um die Achse der Platte zentrierten Kreises angeordnet sind, wobei die Einspannelemente (6) mindestens ein Paar von Klemmen (8, 16, 17) umfassen, wobei mindestens eine Klemme jeder Klemme beweglich ist, wobei die Klammen durch die Drehung der Platte in einer Hin- und Herbewegung zwischen einer Öffnungsposition und einer Verschlussposition bewegt werden, wobei die durchgehende Wurst zwischen den Klemmen (8, 16, 17) in der Verschlussposition eingespannt und von den Klemmen gezogen wird, um sich um die Patte bei ihrer Drehung zu rollen,
**dadurch gekennzeichnet, dass** jede Klemme (8, 16, 17) einen vorderen Einspannrand besitzt, der mit der durchgehenden Wurst in Kontakt kommt, und dass in Verschlussposition die vorderen Ränder der zwei Klemmen einander vollständig auf einem Streifen mit einer Breite ungleich Null überlappen, um auf den Darm eine Querverschiebung zur Längsachse der durchgehenden Wurst auszuüben.

2. Vorrichtung zum Portionieren von Würsten nach Anspruch 1, **dadurch gekennzeichnet, dass** mindestens eine bewegliche Klemme (8, 16, 17) einen Sockel umfasst, der sich in Translation mit Hilfe einer Spindel (19) verlagert, die einen nockenartigen Fühler bildet, der mit mindestens einer Nocke (13, 14) zusammenwirkt.

3. Vorrichtung zum Portionieren von Würsten nach Anspruch 2, **dadurch gekennzeichnet, dass** sich die Spindel (19) in eine Nut einfügt, die in der Seitenwand der mindestens einen zylindrischen Nocke (13, 14) vorgesehen ist, die in Drehung auf der Achse (3) der Platte festgestellt ist, und deren Längsachse mit dieser Achse (3) der Platte zusammenfällt.

4. Vorrichtung zum Portionieren von Würsten nach einem der vorhergehenden Ansprüche,
**dadurch gekennzeichnet, dass** sie ein Scherelement (18) umfasst, das mindestens einem Klemmenpaar (8, 16, 17) zugeordnet ist und sich in Translation durch die Drehung der Platte verlagert, wobei sich das Scherelement zwischen den Klemmen verlagert, um die durchgehende Wurst zu schneiden, wenn die zwei Klemmen in Verschlussposition sind.

5. Vorrichtung zum Portionieren von Würsten nach einem der vorhergehenden Ansprüche,
**dadurch gekennzeichnet, dass** die vorderen Ränder jeder Klemme (8, 16, 17) in Form von Anführungszeichen "<" und ">" sind, wobei die offenen Teile der Anführungszeichen "<" und ">" einander gegenüberliegen, wobei die zwei Klemmen zueinander versetzt sind, so dass bei ihrer Verlagerung in die Verschlussposition die Klemmen einander überlappen und mit ihrem vorderen Rand einen Durchgang bilden, dessen Querschnitt progressiv kleiner wird, um gegen Null zu gehen.

6. Vorrichtung zum Portionieren von Würsten nach Anspruch 5, **dadurch gekennzeichnet, dass** die zwei Schenkel der Anführungszeichen "<" und ">" einander im rechten Winkel schneiden, wobei die vorderen Ränder ein Langloch (27) besitzen, das im Bereich eines Schnittpunktes der zwei Schenkel vorgesehen ist, wobei die Langlöcher in Verschlussposition versetzt sind, damit der Querschnitt des Durchgangs gleich Null ist.

7. Vorrichtung zum Portionieren von Würsten nach einem der vorhergehenden Ansprüche,
**dadurch gekennzeichnet, dass** die zwei Klemmen (8, 16, 17) des Einspannelements (6) beweglich auf der Platte montiert sind und sich zueinander in Translation verlagern.

8. Vorrichtung zum Portionieren von Würsten nach einem der vorhergehenden Ansprüche,
**dadurch gekennzeichnet, dass** die Drehung der Platte, die zur Verlagerung mindestens einer Klemme führt, durch eine vom Bediener betätigte Kurbel erfolgt.

9. Vorrichtung zum Portionieren von Würsten nach einem der vorhergehenden Ansprüche,
**dadurch gekennzeichnet, dass** die Klemmen (8, 16, 17) aus einer Vielzahl von mindestens drei Platten gebildet sind, die gerade und zueinander versetzte vordere Ränder aufweisen, die dazu bestimmt sind, ineinander einzugreifen, um den Darm mindestens zwei senkrechten Verlagerungen in entgegengesetzte Richtungen zu unterziehen.

10. Vorrichtung zum Portionieren von Würsten nach einem der vorhergehenden Ansprüche,
**dadurch gekennzeichnet, dass** die Platte eine Vielzahl von Öffnungsreihen (11) zur Befestigung der Einspannelemente (6) umfasst, wobei jede Reihe dieselbe Anzahl von Öffnungen besitzt, wobei die Öffnungen jeder Reihe entlang eines Radius der Patte (2) ausgerichtet sind, wobei alle Öffnungen einer selben Reihe auf einem Kreis angeordnet sind, dessen Mittelpunkt sich auf der Drehachse der Platte befindet, wobei zwei benachbarte Öffnungen einer selben Öffnung einer selben Reihe jeweils in einem gleichen Abstand sind, um Würste mit derselben Länge während einer vollständigen Umdrehung der Platte zu portionieren.

## Claims

1. Apparatus for dividing sausages into portions from a continuous sausage (7) formed of a flexible casing containing a food product, such as sausage meat, the said apparatus comprising a rotating plate (2) equipped with a succession of clamping members arranged in a circle centred around the axis of the plate, the clamping members (6) comprising at least one pair of pincers (8, 16, 17) of which one pincer at least of each pincer is mobile, the pincers being driven by the rotation of the plate in a back-and-forth motion between an open position and a closed position, the continuous sausage being clamped between the pincers (8, 16, 17) in the closed position and pulled by the said pincers to wind around the plate during the rotation thereof,
**characterised in that** each pincer (8, 16, 17) has a front pinching edge making contact with the continuous sausage, and **in that** in the closed position, the front edges of the two pincers completely overlap on a strip of a non-zero width in such a way as to exert on the casing a movement transverse to the longitudinal axis of the continuous sausage.

2. Apparatus for dividing sausages into portions according to Claim 1,
**characterised in that** the at least one mobile pincer (8, 16, 17) has a base moving in translation with the help of a pin (19) forming a follower of the cam type, cooperating with at least one cam (13, 14).

3. Apparatus for dividing sausages into portions according to Claim 2,
**characterised in that** the said pin (19) fits into a groove made in the lateral wall of the at least one cylindrical cam (13, 14) rotationally fixed on the spindle (3) of the plate and the longitudinal axis of which merges with this spindle (3) of the plate.

4. Apparatus for dividing sausages into portions according to any one of the preceding claims, **characterised in that** it comprises a shearing member (18) associated with at least one pair of pincers (8, 16, 17) and moving in translation owing to the rotation of the plate, the shearing member moving between the pincers to cut the continuous sausage when the two pincers are in the closed position.

5. Apparatus for dividing sausages into portions according to any one of the preceding claims, **characterised in that** the front edges of each pincer (8, 16, 17) are in the shape of guillemets "<" and ">", the open parts of the guillemets "<" and ">" facing one another, the two pincers being offset in relation to one another so that, when they move to the closed position, the pincers overlap, and form with their front edge a passage the section of which gradually decreases to become nil.

6. Apparatus for dividing sausages into portions according to Claim 5,
**characterised in that** the two branches of the guillemets "<" and ">" intersect at right angles, the front edges having an oblong hole (27) made at the point where the two branches intersect, the oblong holes being offset in the closed position so that the section of the passage is nil.

7. Apparatus for dividing sausages into portions according to any one of the preceding claims, **characterised in that** the two pincers (8, 16, 17) of the clamping member (6) are movably mounted on the plate and move towards one another in translation.

8. Apparatus for dividing sausages into portions according to any one of the preceding claims, **characterised in that** the rotation of the plate triggering the movement of at least one pincer is achieved using a crank operated by an operator.

9. Apparatus for dividing sausages into portions according to any one of the preceding claims, **characterised in that** the pincers (8, 16, 17) are formed of a plurality of at least three sheets that have straight front edges and are moved from one another, these sheets being intended to interlock with each other, in such a way as to subject the casing to at least two perpendicular movements in opposite directions.

10. Apparatus for dividing sausages into portions according to any one of the preceding claims, **characterised in that** the plate comprises a plurality of series of orifices (11) for attaching the clamping members (6), each series having the same number of orifices, the orifices of each series being aligned along a radius of the plate (2), all the orifices of the same series being placed on a circle the centre of which is located on the axis of rotation of the plate, two orifices adjacent to the same orifice of the same series being equidistant in such a way as to divide sausages into portions of the same length during one full rotation of the plate.
